(19) Europäisches Patentamt
European Patent Office
Office européen des brevets

(11) **EP 2 901 101 B1**

(12) **EUROPEAN PATENT SPECIFICATION**

(45) Date of publication and mention
of the grant of the patent:
**18.05.2022 Bulletin 2022/20**

(21) Application number: **13776953.5**

(22) Date of filing: **27.09.2013**

(51) International Patent Classification (IPC):
**G01B 9/02** *(2022.01)*     **G01M 11/02** *(2006.01)*
**G02B 5/18** *(2006.01)*

(52) Cooperative Patent Classification (CPC):
**G01B 9/02028; G01B 9/02039; G01B 9/02057;
G01B 9/02072; G01M 11/005; G01M 11/0271**

(86) International application number:
**PCT/EP2013/002904**

(87) International publication number:
**WO 2014/048574 (03.04.2014 Gazette 2014/14)**

(54) **MEASURING METHOD**

MESSVERFAHREN

PROCÉDÉ DE MESURE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.09.2012 DE 102012217800
28.09.2012 US 201261707014 P**

(43) Date of publication of application:
**05.08.2015 Bulletin 2015/32**

(73) Proprietor: **Carl Zeiss SMT GmbH
73447 Oberkochen (DE)**

(72) Inventor: **HETZLER, Jochen
73434 Aalen (DE)**

(74) Representative: **Zeuner Summerer Stütz
Patent- und Rechtsanwälte
Partnerschaft
Nußbaumstraße 8
80336 München (DE)**

(56) References cited:
**EP-A1- 1 316 789          WO-A1-2008/110239
US-A1- 2011 199 575      US-A1- 2012 127 481
US-A1- 2012 229 814**

• **FERCHER A F: "COMPUTER-GENERATED
HOLOGRAMS FOR TESTING OPTICAL
ELEMENTS: ERROR ANALYSIS AND ERROR
COMPENSATION", OPTICA ACTA,, vol. 23, no. 5,
1 May 1976 (1976-05-01), pages 347-365,
XP001027067, ISSN: 0030-3909**

**Description**

Background of the invention

The invention relates to a method for determining a deviation of an actual shape from an intended shape of an optical surface of an optical element.

A device for determining a deviation of an actual shape from an intended shape is described in e.g. US 2010/0177321 A1. This device comprises an interferometer for generating a measurement wave, the wavefront of which is adapted to an aspherical intended shape of the optical surface by means of a diffraction grating. The wavefront of the adapted measurement wave is evaluated by interferometry after reflection at the optical surface and the deviation of the actual shape of the optical surface from the intended shape thereof is determined in the process.

In this case, the diffraction grating can for example be a computer-generated hologram (CGH), which is generated by virtue of the design of the interferometer being simulated by a suitable calculation method, such as e.g. a ray tracing method, and, in the process, a phase function of the diffraction grating being calculated such that the latter has a desired function in the beam path of the interferometer arrangement. It is then possible to produce the diffraction grating from the calculated phase function thereof.

The accuracy of the shape measurement depends on the accuracy of the CGH.

Here, it is not an exact-as-possible production which is decisive, but rather an exact-as-possible measurement of all possible errors in the CGH. Known errors can be removed by calculation when measuring the shape of the test object. Hence, the CGH forms the reference. While it is possible to calibrate all non-rotationally symmetric errors absolutely in the case of rotationally symmetric aspheres, all CGH errors have an impact on the shape measurement in the case of free-form surfaces, i.e. non-spherical surfaces without rotational symmetry. As a result, there is a sharp increase in the requirements in respect of the accuracy of the measurement of the CGH. In the process, it is important to know very precisely the distortion of the diffracting structures of the CGH, i.e. the lateral positions of the diffractive structures in relation to their intended positions, and the shape of the profile of the CGH. However, the measurement accuracy with which these parameters can be determined by means of measuring instruments known from the prior art does not suffice for the continuously increasing demands. Other known apparatuses for highly accurately measuring optical surfaces use two CGHs arranged in series, as a result of which the effort required for the measurement configuration increases.

Underlying object

It is an object of the invention to solve the aforementioned problems and, in particular, to provide a method for measuring optical surfaces of any shape, in particular non-spherical optical surfaces without rotational symmetry, with an improved accuracy.

Solution according to the invention

The problem is solved according to the invention by the method of claim 1.

According to a comparative example a diffractive optical element has a substrate and a diffractive structure pattern arranged on the substrate. The diffractive structure pattern is configured to convert a plane or spherical input wave radiated thereon into at least four separate output waves, wherein at least one of the output waves is a non-spherical wave, at least a further one of the output waves is a spherical wave and at least two further ones of the output waves respectively are a plane wave or a spherical wave.

The aforementioned output waves are thus generated by means of merely a single diffractive optical element, i.e. a diffractive structure pattern which is arranged on a single substrate. Hence, the diffractive optical element can be configured in accordance with several variants. In accordance with a first variant, the wave radiated thereon is plane and the output waves comprise at least one non-spherical wave and at least three spherical waves. In accordance with a second variant, the wave radiated thereon is spherical and the output waves comprise at least one non-spherical wave and at least three spherical waves. In accordance with a third variant, the wave radiated thereon is plane and the output waves comprise at least one spherical wave and at least two plane waves. In accordance with a fourth variant, the wave radiated thereon is spherical and the output waves comprise at least one spherical wave and at least two plane waves. In the case of the first and the second variant, the intensities of the spherical waves differ by less than 30%, in particular by less than 10%, from one another in accordance with one embodiment.

It is also possible to refer to the plane or spherical input wave as spherical wave only, with, in this case, a plane wave counting as a special case of a spherical wave with an infinite radius. The non-spherical output wave can be a measurement wave adapted to an optical surface to be measured, which measurement wave is radiated onto the surface when the latter is measured by interferometric means. The further output waves can also be referred to as calibration waves.

The diffractive optical element is, in particular, embodied as computer-generated hologram (CGH). The diffractive structure pattern can also be referred to as phase grating or diffraction grating, although it should be noted that this should not necessarily be understood to mean a regular grating, but rather, in particular, line structures which can have bends, which can, in principle, deviate from one another in terms of their shape and which can have a variable distance between them. As explained above, the diffractive structure pattern is arranged on the substrate of the diffractive optical element, i.e. it is merely arranged on one substrate. The diffractive structure pattern is therefore not composed of several sub-patterns which are arranged on different substrates.

A diffractive structure pattern which generates separate output waves as described above may be configured as a complex encoded phase grating. Within the meaning of the application, a spherical wave is a wave with a spherical wavefront, i.e. a wave in which the wavefront is formed by at least a spherical surface section.

Within the meaning of the application, a non-spherical wave is a wave, the wavefront of which has a deviation of at least $10\ \lambda$ from any ideal sphere, in particular from the sphere with the best fit to the wavefront, where $\lambda$ is the wavelength of the input wave radiated thereon. In other words, the non-spherical wave has at least one point at which it deviates from every ideal sphere by at least $10\ \lambda$. If the wavelength is 500 nm, a non-spherical wave within the meaning of the application has a deviation of at least $5\ \mu m$ from any ideal sphere. Within the meaning of the application, non-spherical waves comprise both waves with rotationally symmetric wavefronts, i.e. aspherical waves in the conventional sense, and waves with non-rotationally symmetric wavefronts, i.e. waves, the wavefronts of which have the shape of so-called free-form surfaces.

In accordance with one embodiment, the non-spherical wave has a wavefront in the form of a free-form surface, wherein the wavefront has a deviation of at least 1 mm from any ideal sphere.

Here, "separate output waves" should be understood to mean that the output waves have different propagation directions and can therefore be detected or reflected back to the diffractive optical element independently of one another, such that these can be measured separately in an interferometric measurement system.

Compared to a CGH conventionally employed for interferometric measurements of the shape, the diffractive optical element according to the invention differs in that, according to the invention, at least three further output waves, which are plane or spherical, are generated in addition to the non-spherical output wave. In the aforementioned conventional CGH, no more than two plane or spherical waves are generated, in addition to one or more non-spherical waves, in the different orders of diffraction.

If two CGHs, arranged in series, are used, a wave which is formed by a sphere and a non-sphere and which is therefore likewise non-spherical is usually radiated onto the second CGH. If a plane or spherical wave were to be radiated onto this CGH, not a single plane or spherical wave would be generated in the process.

Generating the at least three further output waves of the aforementioned type in addition to the non-spherical output wave when a plane or spherical input wave is radiated onto the diffractive optical element according to the invention renders it possible for the diffractive optical element to be measured in respect of manufacturing errors by means of the further output waves. During a then subsequent measurement of an optical surface using the diffractive optical element, it is then once again possible to remove from the measurement result by calculation the effects of the manufacturing error. As a result, it is possible to increase the measurement accuracy of measuring the shape, in particular of non-spherical optical surfaces.

In accordance with one embodiment, the structure pattern is configured such that the at least two further output waves are plane waves, the propagation directions of which are symmetrical to one another in relation to a direction of incidence of the input wave. In accordance with one variant, the two plane output waves are a positive and negative order of diffraction of the same order, such as e.g. the +1st and -1st order of diffraction, at a linear grating.

In accordance with a further embodiment, the structure pattern is configured such that, in addition to the two plane output waves forming a first wave pair, the separate output waves have two further plane waves in the form of a second wave pair, the propagation directions of which are likewise symmetrical to one another in relation to the direction of incidence, with a plane spanned by the propagation directions of the first wave pair deviating from the plane spanned by the propagation directions of the second wave pair. In particular, the plane spanned by the propagation directions of the first wave pair is substantially perpendicular to the plane spanned by the propagation directions of the second wave pair. In this context, substantially perpendicular means an angle of at least 80°, in particular at least 85°, at least 89° or approximately 90°.

In accordance with a further embodiment, an angle $\alpha_i$ is defined at every point i of the diffractive structure pattern by the angle between a first difference vector and a second difference vector, the first difference vector being defined by the difference between the wave vector $k_i(A)$ of the non-spherical wave emanating from the point i and the wave vector $k_i(in)$ of the input wave impinging on the point i and the second difference vector being defined by the difference between the wave vector $k_i(S)$ of the at least one spherical wave emanating from the point i and the wave vector $k_i(in)$ of the input wave impinging on the point i. Furthermore, the structure pattern is configured such that the absolute value of the angle $\alpha_i$, averaged over the points i of the diffractive structure pattern, is greater than 5°, in particular greater than 10°, in projection onto a plane parallel to the structure pattern. The wave vector is also referred to as "k-vector" and is that vector which is perpendicular to the wavefront of a wave. In other words, an angle ω is greater than 5°, where ω is defined as follows:

$$\omega = \frac{1}{N} \sum_{i=1}^{N} \left| \angle_{xy} \left[ (k_i(A) - k_i(in)), (k_i(S) - k_i(in)) \right] \right| .$$

Here, N denotes the number of points i over which the mean value is formed. Expressed once again in other words, the angle ω is defined by the mean value of the absolute value of the angle $\alpha_i^{xy}$ over the spatial coordinates i of the diffractive optical element, i.e. $\omega = \frac{1}{N} \sum_{i=1}^{N} \left| \alpha_i^{xy} \right|$ , where $\alpha_i^{xy}$ is the angle projected onto the xy-plane between the difference vector $[k_i(A) - k_i(in)]$ and the difference vector $[k_i(S) - k_i(in)]$.

Here, the mean is formed over the area covered by the structure pattern, i.e. the optically effective area of the diffractive optical element. The propagation direction of the input wave is referred to as the z-direction, and so the xy-plane is the plane perpendicular to the propagation direction of the input wave.

In accordance with a further embodiment, the diffraction efficiency of the structure pattern for generating the non-spherical wave is at least 50% greater than the diffraction efficiency of the structure pattern for generating the at least one spherical wave. As a result, the intensity of the non-spherical wave is at least 50% greater than the intensity of the at least one spherical wave. In accordance with one embodiment variant, the diffraction efficiency for generating the at least one non-spherical wave is at least 70% greater, in particular at least 100% greater, than the diffraction efficiency for generating the at least one spherical wave. This can be compensated for by using metallized calibration mirrors. In accordance with one embodiment, the sum of the diffraction efficiencies of the at least four output waves is greater than 30%.

In accordance with a further embodiment, the structure pattern is configured such that the radiation power of the non-spherical output wave is greater than the respective radiation power of the spherical or the plane output waves. That is to say, the output wave with the non-spherical wavefront is weighted more strongly in the structure pattern than the remaining three output waves with the spherical or the plane wavefront. In accordance with one exemplary embodiment, the radiation power of the output wave with the non-spherical wavefront has at least 30%, in particular approximately 40%, of the radiation power of the input wave and the remaining three output waves with the spherical or the plane wavefront each have between 15% and 25%, in particular approximately 20%, of the radiation power of the input wave.

In accordance with a further embodiment, the structure pattern is configured such that the input wave radiated thereon is converted into at least five separate output waves, with four of the output waves being embodied as spherical waves. A further one of the at least five output waves is the non-spherical wave, in particular a free-form wave.

In accordance with a further embodiment, the output waves have respective mean propagation directions which are oriented to one another such that the mean propagation directions of the four spherical output waves in pairs are in each case not arranged symmetrical to one another in relation to an axis defined by the mean propagation direction of the non-spherical output wave. In this context, "not symmetrical" is understood to mean that there is a deviation of at least 1°, in particular of at least 5°, compared to symmetric arrangement. The mean propagation direction is that propagation direction which emerges from intensity-weighted averaging of the different propagation directions of each output wave. In accordance with one embodiment variant, this condition applies to at least 90% of all points on the diffractive optical element.

In accordance with a further embodiment, the diffractive structure pattern comprises a multilevel phase grating. As a person skilled in the art is well aware, a multilevel phase grating is understood to mean a phase grating which has at least one intermediate level between the uppermost and the lowermost level. Hence, such a phase grating has at least three levels. In accordance with different embodiments, provision can be made for four or more levels. A so-called blazed phase grating has so many levels that the profile is represented by inclined surfaces. The use of a multilevel phase grating renders it possible to at least partially compensate or even overcompensate for a loss in diffraction efficiency caused by complex encoding. Within the meaning of the application, a multilevel phase grating should also be understood to mean such a blazed phase grating. A person skilled in the art can obtain background information in respect of multilevel phase gratings from the handbook by Donald C. O'Shea et al. "Diffractive optics: design, fabrication, and test", 2004, The Society of Photo-Optical Instrumentation Engineers, pages 29 to 35. A multilevel phase grating within the meaning of the application is, in particular, also understood to mean a laterally blazed phase grating, such as described e.g. in the H. Kleemann et al., "Combination of blazed and laterally blazed structures", Diffractive Optics and Micro-Optics, OSA Technical Digest (Optical Society of America), paper DTuC7, 2004.

According to a further comparative example, provision is furthermore made for a diffractive optical element which comprises a substrate and a diffraction grating arranged thereon. The diffraction grating has grating lines arranged at a distance from one another, a mean periodic distance of the diffraction grating being determined by a center-to-center distance, averaged over the diffraction grating, between in each case neighboring grating lines. The grating lines having a wave-like form such that a mean wave period of the grating lines lies in the region between 3 times and 20 times the mean periodic distance of the diffraction grating and a variation in the grating lines transversely to their longitudinal extent has a span which lies in the region between 0.1 times and 3 times the mean periodic distance of the diffraction grating.

The mean periodic distance of the diffraction grating is measured in the transverse direction of the grating lines. A waved form of the grating lines is understood to mean that the grating lines deviate upward and downward, i.e. transversely to the longitudinal extent of the grating lines, in relation to a respective straight line. Here, the wave period can vary from deflection to deflection. Here, the span of the variation of the grating lines transversely to the longitudinal extent thereof should be understood to mean a span of the deviations of the respective grating line from its imagined straight shape, i.e. from the straight line with the best fit to the respective grating line. In particular, the span of the variation is twice the amplitude of a wave determining the grating line shape.

In accordance with a further embodiment, the diffraction grating covers at least 20% of the substrate. If the substrate has a plate- shaped design, 20% of the upper side and lower side, respectively, of the substrate are covered by the diffraction grating.

In accordance with a further embodiment, at least 90%, in particular at least 95% or at least 99%, of the grating lines of the diffraction grating are embodied as continuous lines which extend without interruption between edge regions of the diffraction grating, i.e. these lines do not end within the area of the substrate covered by the diffraction grating.

In accordance with a further embodiment, the diffraction grating is configured such that a stripe density of the grating lines averaged within a square measurement area of the diffraction grating with 1 mm edge length over any square partial area with 50 $\mu$m edge length has a variation which extends over a span of less than 20 line pairs/mm. In accordance with one example for a method for determining the stripe density within a square partial area, the sum of the width of the grating line and the width of the intermediate space, adjoining on one side, to the next grating line is initially determined every 1 $\mu$m along each grating line. The inverse of the value determined thereby is formed and hence the stripe density is established at the relevant measurement point. The values for the stripe densities are averaged over all measurement points within the relevant partial area. This happens for all partial areas within the square measurement area, i.e. for 20 x 20 = 400 partial areas, such that a mean stripe density is determined for each partial area. In accordance with the exemplary embodiment discussed above, the variation of the mean stripe density has a span of less than 20 line pairs/mm, i.e. the mean stripe densities established for the various partial areas within the measurement area vary by less than 20 line pairs/mm. By way of example, if the stripe density on average is approximately 200 lines/mm, the stripe density varies within the span of 190 to 210 lines/mm.

In accordance with a further embodiment, the structure pattern is configured such that, in addition to the at least four separate output waves, a reference wave in Littrow reflection is also generated as reference wave from the input wave radiated thereon, which reference wave can be used as a reference during an interferometric measurement.

The features described in the aforementioned embodiments and embodiment variants can be transferred individually or in combination to the diffractive optical element with the wave-like grating lines.

Furthermore, according to another comparative example, provision is made for a diffractive optical element which has a substrate and a diffractive structure pattern arranged thereon. The diffractive structure pattern is configured such that the structure pattern converts a plane or spherical input wave radiated thereon into at least three separate output waves with in each case a spherical wavefront.

The features described in the aforementioned embodiments and embodiment variants can be transferred individually or in combination to this diffractive optical element with the wave-like grating lines. In particular, this diffractive optical element can contain features from above-described embodiments of the diffractive optical element generating at least four separate output waves.

According to the invention, a method for determining a deviation of an actual shape from an intended shape of an optical surface of an optical element is provided. This method comprises the following steps: generating an input wave, arranging a diffractive optical element in the beam path of the input wave and converting the input wave into at least three separate output waves by interaction with the diffractive optical element, wherein one of the output waves is a measurement wave, adapted to the intended shape of the optical surface, with a non-spherical wavefront, and at least two further ones of the output waves are calibration waves. The method further comprises the steps of determining calibration corrections of the diffractive optical element by means of each one of the at least two calibration waves, arranging the optical surface in the beam path of the adapted wave and measuring the wavefront of the adapted measurement wave after interaction with the optical surface, wherein the wavefront of the adapted measurement wave is measured with the diffractive optical element being oriented in respect of the input wave the same as during the determining of the calibration corrections. Further, according to the above method the measured wavefront is corrected by means of the determined calibration corrections.

In different words, according to the above method the diffractive optical element is arranged in respect of the propagation direction of the input wave in a given orientation for determining the calibration corrections, wherein the calibration corrections are determined by analyzing each one of the at least two calibration waves. This orientation is unchanged when measuring the wavefront of the adapted wave. Again in different words, the input wave has the same direction of incidence in the local coordinate system of the diffractive optical element when generating and analyzing the measurement wave and when generating and analyzing the calibration waves. The output waves are especially generated simultaneously by interaction of the input wave with the diffractive optical element.

As mentioned above, "separate output waves" is to be understood to mean that the output waves have different propagation directions and can therefore be detected or reflected back to the diffractive optical element independently of one another, such that these can be measured separately in an interferometric measurement system.

By measuring the wavefront of the adapted wave with the diffractive optical element being oriented in respect of the input wave the same as during the determining of the calibration corrections allows an especially precise calibration of the diffractive optical element in respect of manufacturing errors, as the determined calibration corrections can be applied directly to the measured wavefront of the adapted wave. As the orientation remains unchanged, the determined calibration corrections precisely reflect the manufacturing errors of the diffractive optical element relevant to the generation of the measurement wave. In different words, no errors are introduced into the correction of the wavefront due to a deviation between the measured calibration corrections and the real deviations of the structure on the diffractive optical element generating the measurement wave, which deviation would be due to a different orientation of the diffractive optical element.

According to an embodiment the wavefront of the adapted measurement wave is measured with the diffractive optical element being arranged in the same position in respect of the input wave as during the determining of the calibration corrections. That means both the orientation and the position of the diffractive optical element remains unchanged when measuring the wavefront of the adapted measurement wave.

The at least two calibration waves include a first calibration wave and a second calibration wave. The calibration corrections of the diffractive optical element are determined by means of the first calibration wave and by means of the second calibration wave.

According to a further embodiment the determining of calibration corrections includes determining first calibration corrections from a first one of the calibration waves and second calibration corrections from a second one of the calibration waves, wherein the first calibration corrections and the second calibration corrections are determined with the diffractive optical element being oriented the same in respect of the input wave, i.e. the orientation of the diffractive optical element is unchanged between determining the first calibration corrections and the second calibration corrections.

According to a further embodiment, the diffractive optical element comprises a complex encoded phase grating. Such a complex encoded phase grating is configured with at least three phase functions $f_1$ to $f_3$ such that respective diffracted waves are generated for each individual one of the various phase functions $f_1$ to $f_3$, which diffracted waves form the above mentioned output waves. The diffracted waves generated for each of the phase functions $f_1$ to $f_3$ are each waves generated in the first diffraction order at the phase grating $f_G$. The properties of a complex encoded phase grating according to the application is decribed in more detail in the subsequent detailed description of exemplary embodiments. The use of a complex encoded phase grating allows to configure the diffractive optical element such that the output waves have different intensities. This may be done by assigning different weights to the individual phase functions $f_1$ to $f_3$ within the complex encoded phase grating.

According to an embodiment each one of the at least three output waves are generated in the same diffraction order at the diffractive optical element. Especially each one of the at least three output waves are generated in first diffraction order, in particular $+1^{st}$ diffraction order, at the diffractive optical element. In case of a complex encoded grating as described in this application only $+1^{st}$ diffraction order waves form the output waves. When generating the output waves in the first diffraction order, calibration waves having a simple geometrical shape, such as a plane or a spherical shape, can be generated. With such simple geometrical shapes a precise calibration can be accomplished, as appropriate calibration objects can be manufactured with high precision.

According to a further embodiment the output waves have respective mean propagation directions which are oriented to one another such that the mean propagation directions of the at least two calibration waves are arranged asymmetrically, i.e. are not arranged symmetrical, to one another in relation to an axis defined by the mean propagation direction of the measurement wave. With such an asymmetric arrangement the generation of interfering or spurious light at the location of the measurement wave can be avoided.

According to a further embodiment at least one of the calibration waves is a spherical wave. According to further embodiments of the invention at least two or at least three calibration waves are spherical waves.

According to an embodiment of the invention the input wave is a plane or spherical wave, the input wave is converted into at least four separate output waves by interaction with the diffractive optical element, wherein at least one further one of the output waves is a calibration wave with spherical wavefront and at least two further ones of the output waves are calibration waves with, in each case, a plane or a spherical wavefront. The calibration corrections of the diffractive optical element are determined by means of the three calibration waves.

The features mentioned above or below with regard to the method in any of the described embodiments according to the invention may be transferred to the diffractive optical element in any one of the described embodiments, especially to the diffractive optical element configured to convert an input wave into at least four separate output waves, and vice versa. Especially the diffractive optical element may be configured to generate the four separate output waves such that a wavefront of the non-spherical wave after interaction with an optical surface may be measured with the diffractive optical element being oriented in respect of the input wave the same as during a determining of calibration corrections by means of the other output waves. According to a further embodiment the diffractive optical element is configured to generate the four separate output waves simultaneously, especially such to generate each one of the output waves in first diffraction order.

According to a further comparative example, provision is made for a method for determining a deviation of an actual shape from an intended shape of an optical surface of an optical element. In one embodiment, the method according to the invention comprises the following steps: generating a plane or spherical input wave, arranging a diffractive optical element in the beam path of the input wave and converting the input wave into at least four separate output waves by interaction with the diffractive optical element, wherein at least one of the output waves is a measurement wave, adapted to the intended shape of the optical surface, with a non-spherical wavefront, at least one further one of the output waves is a calibration wave with spherical wavefront and at least two further ones of the output waves are calibration waves with, in each case, a plane or a spherical wavefront. Furthermore, in accordance with the method according to the comparative example, calibration corrections of the diffractive optical element are determined by means of the calibration waves, the optical surface is measured in the beam path of the adapted measurement wave and the wavefront of the adapted measurement wave is measured after interaction with the optical surface. Furthermore, the measured wavefront is corrected by means of the determined calibration corrections. It is now possible to determine the deviation of the actual shape of the optical surface from the intended shape by means of the corrected wavefront.

The diffractive optical element used in the method according to the invention can, in particular, be embodied in accordance with one of the above-described embodiments of the comparative examples. In accordance with one embodiment according to the invention, in order to determine the calibration corrections, one or more calibration objects are arranged in the beam paths of the calibration waves and there is an interferometric evaluation of the calibration waves after interaction with the calibration object or objects.

Furthermore, according to a further comparative example, provision is made for a method for producing an optical element. In one embodiment, this method comprises the step of manufacturing the optical element with an optical surface which has a diameter of greater than 500 mm. Furthermore, an actual shape of the optical surface is measured so accurately in relation to an intended shape by interferometry using merely one diffractive optical element that deviations of the actual shape from the intended shape, which trace back to oscillations with vibration wavelengths of between d/100 and d/5, are determined with an accuracy of 0.05 nm, the intended shape being a free-form surface, which has a deviation from each rotationally symmetric asphere of more than 5 $\mu$m. Furthermore, the optical surface is adapted to the intended shape by mechanical processing of the optical surface on the basis of the interferometric measurement result. Adapting the optical surface to the intended shape in this case occurs within the scope of the measurement accuracy of the interferometric measurement.

The interferometric measurement of the actual shape of the optical surface can, in particular, take place by carrying out the above-described measuring method in one of the embodiments according to the invention. The diffractive optical element used in the production method can, in particular, be embodied in one of the above-described embodiments.

Furthermore, according to a further comparative example , provision is made for an optical element, which has an optical surface with a diameter d of greater than 500 mm. Here, an actual shape of the optical surface is adapted to an intended shape such that deviations of the actual shape from the intended shape, which trace back to oscillations with vibration wavelengths of between d/100 and d/5, are no more than 0.05 nm, in particular no more than 0.02 nm. Here, the intended shape is a free-form surface, which has a deviation from each rotationally symmetric asphere of more than 5 $\mu$m, in particular of more than 10 $\mu$m.

By way of example, the optical element can be embodied as EUV mirror. In particular, the deviation of the intended shape from the rotationally symmetric asphere with the best fit thereto is more than 5 $\mu$m, in particular more than 10 $\mu$m. In accordance with exemplary embodiments, the optical surface can have a diameter of more than 1000 mm and all oscillations can relate to vibration wavelengths of between 1 mm and 50 mm.

In accordance with a further embodiment, the intended shape has a deviation from every sphere of at least 1 mm. As a result, the optical surface is a large or strong free-form surface.

In accordance with a further exemplary embodiment, deviations of the actual shape from the intended shape, which trace back to oscillations of between d/100 and d/5, are defined by the largest amplitude of the deviations of the actual shape from the intended shape at any point on the optical surface.

Both the features mentioned above and other features of the embodiments according to the invention are explained in the claims and in the description of the figures, whereby the full scope of the present invention is only defined by the appended claims.

Brief description of the drawings

The above and further advantageous features of the disclosure are illustrated in the following detailed description of exemplary embodiments with reference to the accompanying schematic drawings, in which:

Figure 1     shows a sectional view of an interferometric measurement system with a diffractive optical element,

Figure 2     depicts, in the sectional view in accordance with Figure 1, output waves generated by diffracting an input wave at the diffractive optical element in a first embodiment,

Figure 3     depicts the output waves from Figure 2 in the direction space,

Figure 4     depicts angular relationships of wave vectors of two of the output waves in accordance with Figure 2,

Figure 5     depicts the composition of a diffractive structure pattern of the diffractive optical element in accordance with Figure 2,

Figure 6     depicts a calibration of the diffractive optical element by means of one of the output waves with a spherical wavefront,

Figure 7     depicts a further calibration of the diffractive optical element by means of plane output waves,

Figure 8     depicts, in the sectional view in accordance with Figure 1, output waves generated by diffracting the input wave at a further embodiment of the diffractive optical element,

Figure 9     depicts the output waves from Figure 8 in the direction space,

Figure 10    depicts the composition of a diffractive structure pattern of the diffractive optical element in accordance with Figure 8,

Figure 11    shows diagrams which depict diffraction efficiency and contrast when using the diffractive optical element in accordance with Figure 9 in the interferometric measurement system in accordance with Figure 1,

Figure 12    depicts the size ratios of a section of the phase grating of the diffractive optical element in accordance with Figure 8 in relation to the diffractive optical element as a whole,

Figure 13    depicts a waviness of the grating lines of the phase grating from Figure 8,

Figure 14    shows one of the grating lines from the phase grating of Figure 13,

Figure 15    depicts output waves generated by means of diffraction at a further embodiment of the diffractive optical element, in the direction space,

Figure 16    depicts output waves generated by means of diffraction at a further embodiment of the diffractive optical element, in the direction space,

Figure 17    depicts a diffractive structure pattern, embodied as multilevel phase grating, of the diffractive optical element,

Figure 18    shows a top view of an optical element produced according to an example, and

Figure 19    shows a sectional view of the optical element from Figure 18.

Detailed description

In the exemplary embodiments or embodiments described below, elements which are functionally or structurally similar to one another are as far as possible provided with the same or similar reference signs. Therefore, for understanding the features of the individual elements of a specific exemplary embodiment, reference should be made to the description of other exemplary embodiments or the general description of the invention.

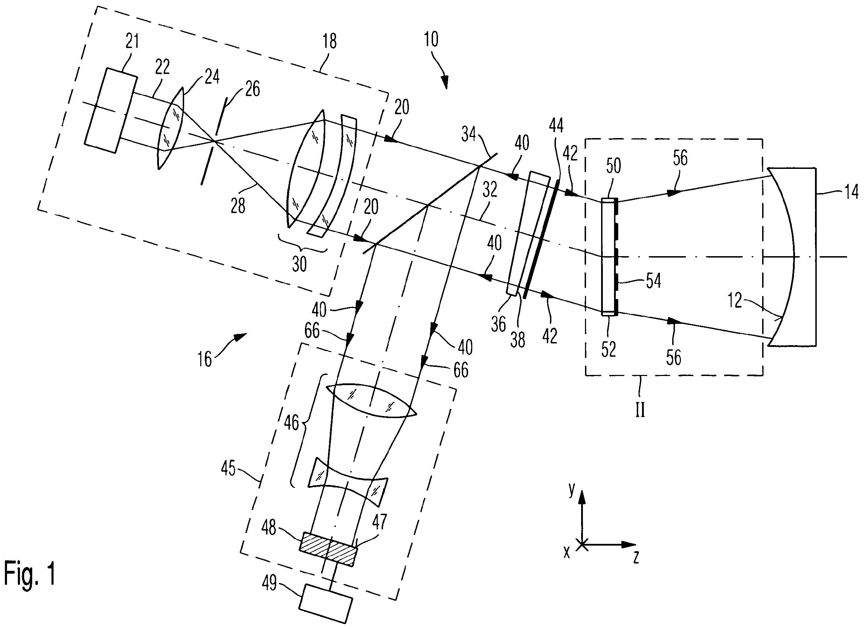

To facilitate the description, a Cartesian xyz-coordinate system is indicated in the drawing, which system reveals the respective positional relationship of the components illustrated in the figures. In Figure 1, the x-direction extends perpendicularly to the plane of the drawing and into the latter, the y-direction extends upward and the z-direction extends toward the right.

Figure 1 depicts an interferometric measurement system 10 in one embodiment according to the invention. The measurement system 10 is suitable for determining a deviation of an actual shape from a non-spherical intended shape of an optical surface 12 of a test object in the form of an optical element 14. By way of example, the optical element 14 can be embodied in the form of an optical lens element or of a mirror. In the illustrated case, the optical element 14 is a concave mirror for the EUV lithography, i.e. a mirror which, in a microlithographic projection exposure apparatus, is designed with an exposure wavelength in the EUV wavelength range. The EUV wavelength range extends to wavelengths below 100 nm and relates, in particular, to wavelengths of approximately 13.5 nm and/or approximately 6.8 nm. The optical element 14 is assembled in the measurement system 10 by means of a holder not depicted in the drawing. The non-spherical intended shape of the optical surface 12 can have the shape of a rotationally symmetric asphere or a free-form surface, as described in more detail in the general description.

The interferometric measurement system 10 comprises an interferometer 16, which in turn comprises a light source 18, a beam splitter 34 and an interferometer camera 45. The light source 18 generates illumination radiation 20 and, to this end, it comprises a laser 21, such as a helium neon laser, for generating a laser beam 22. The illumination radiation 20 has sufficiently coherent light for carrying out an interferometric measurement. In the case of a helium neon laser, the wavelength of the illumination radiation 20 is approximately 633 nm. However, the wavelength of the illumination radiation 20 can also have different wavelengths in the visible and non-visible wavelength range of electromagnetic radiation.

The laser beam 22 is focused onto a stop 26 by a focusing lens element 24 in such a way that a divergent beam of coherent light emanates from the aperture. The wavefront of the divergent beam 28 is substantially spherical. The divergent beam 28 is collimated by a lens-element group 30, as a result of which the illumination radiation 20 is generated by a substantially plane wavefront in the present case. The illumination radiation 20 propagates along an optical axis 32 of the interferometer 16 and passes through the beam splitter 34.

The illumination radiation 20 is thereupon incident on a Fizeau element 36 with a Fizeau area 38. A part of the light of the illumination radiation 20 is reflected at the Fizeau area 38 as reference wave 40. The light of the illumination radiation 20 passing through the Fizeau element 36 propagates as an input wave 42, with a plane wavefront 44 along the optical axis 32 and is incident on a diffractive optical element 50. In other embodiments of the measurement system 10, the wavefront of the input wave 42 can also be spherical.

In relation to the wavelength of the illumination radiation 20, the diffractive optical element 50 comprises a transmissive substrate 52 and, arranged on the substrate 52, a diffractive structure pattern 54 in the form of a computer-generated hologram (CGH).

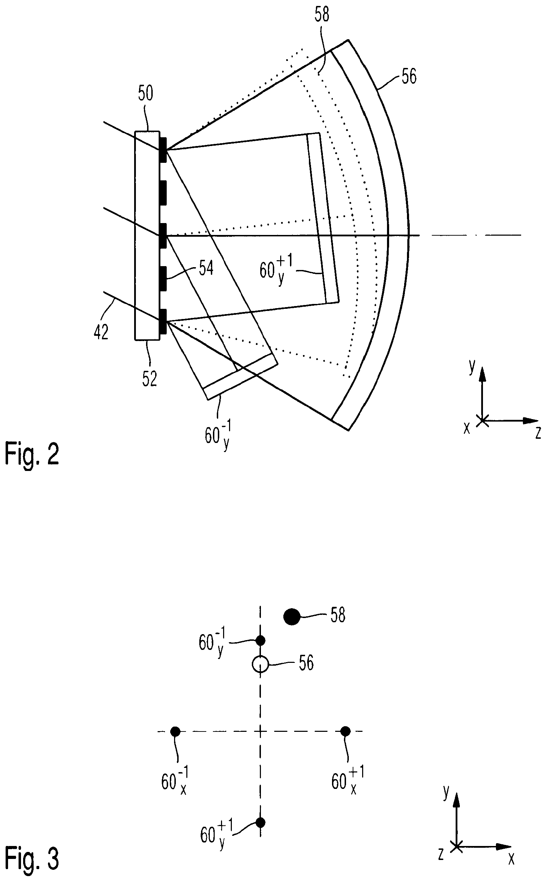

In a first embodiment, the structure pattern 54 is configured in such a way that the input wave 42 is converted into a non-spherical output wave 56, a spherical output wave 58 and plane output waves 60 by diffraction at the structure pattern 54, as depicted in Figure 2. The spherical output wave and the plane output waves 60 serve as calibration waves, as will be clarified below.

The output wave 56 is also plotted in Figure 1 and serves as measurement wave for measuring the actual shape of the optical surface 12 of the optical element 14. To this end, the output wave 56 has a wavefront which is adapted to the intended shape of the optical surface 12. The output wave 56 is therefore also referred to as adapted measurement wave. As mentioned above, the output wave 56 is non-spherical and therefore has a rotationally symmetric aspherical wavefront or a wavefront in the form of a free-form surface. A free-form surface within the meaning of the application has no rotational symmetry, as already explained in the general part of the description.

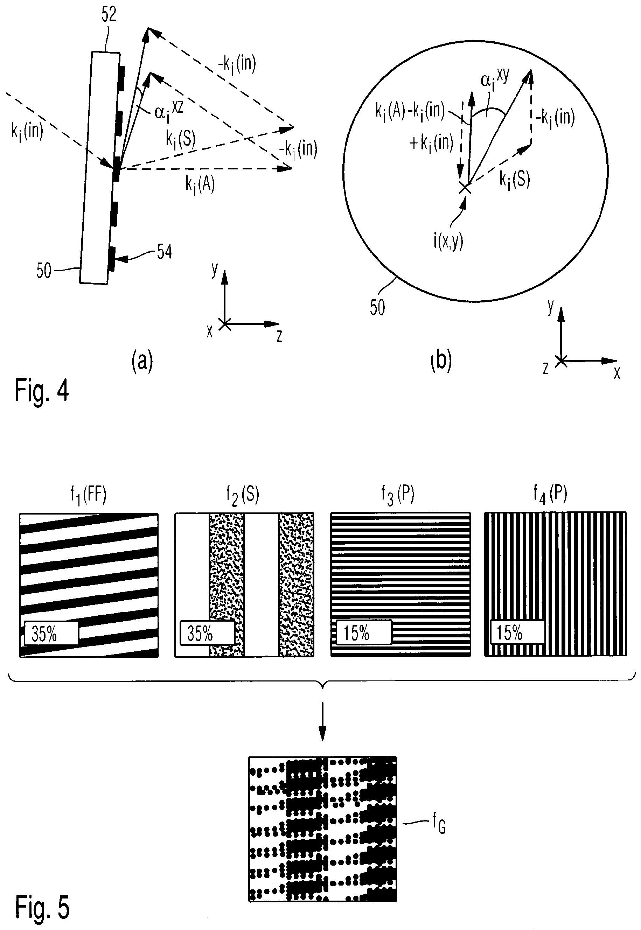

Figure 4 depicts the wave vector $k_i(in)$ of the input wave 42, the wave vector $k_i(S)$ of the spherical output wave 58 and the wave vector ki(A) of the non-spherical output wave 56 at a spatial coordinate $i(x,y)$ on the diffractive structure pattern 54 in two sectional illustrations, once, in (a), in the yz-section and, in (b), in the xy-section. Here, the diffractive structure pattern 54 is arranged in the xy-plane. The angle between the difference vector $[k_i(A)-k_i(in)]$ and the difference vector $[k_i(S)-k_i(in)]$ is referred to as angle $\alpha_i$. The angle $\alpha_i^{xz}$, plotted in (a), is the projection of $\alpha_i$ in the xz-plane and the angle $\alpha_i^{xy}$, plotted in (b), is the projection of $\alpha_i$ in the xy-plane.

The mean value of the absolute value of the angle $\alpha_i^{xy}$, i.e. of the angle $\alpha_i$ projected into the xy-plane, over the spatial coordinates $i(x,y)$ of the diffractive structure pattern 54 is referred to as angle $\omega$. In accordance with one embodiment, the angle ω is greater than 5°. Hence, the following applies:

$$\frac{1}{N}\sum_{i=1}^{N}\left| \angle_{xy}\left[(k_i(A)-k_i(in)),(k_i(S)-k_i(in))\right] \right| > 5° .$$

Here, N denotes the number of points i, over which the mean value is formed. In accordance with further embodiments, ω is greater than 10° or greater than 15°.

As depicted in figure 5, the structure pattern 54 in accordance with Figure 2 comprises a complex encoded phase grating $f_G$, which contains various phase functions $f_1$ to $f_4$ such that respective diffracted waves are generated for each individual one of the various phase functions $f_1$ to $f_4$. The illustrations depicted in Figure 5 show contour lines of the functions $f_1$ to $f_4$. These contour lines of the phase functions correspond to the grating lines of the respective diffraction grating. The illustration of $f_G$ depicted in Figure 5 shows a greatly magnified section of the structure pattern 54 in accordance with Figure 2. In other words, the complex encoded phase grating $f_G$ has such an effect on the input wave 42 that corresponding, mutually independent, diffracted waves of first diffraction order are generated by each of the diffraction gratings defined by the phase functions $f_1$ to f4. One can imagine the complex encoded phase grating $f_G$ to be several CGHs with the individual phase functions $f_1$ to $f_4$ superposed at one point. This superposition of the functionalities corresponds to the operation S = $W_1$ * exp($i$*$f_1$) + $W_2$ * exp($i$*$f_2$) + $W_3$ * exp($i$*$f_3$) + $W_4$ * exp($i$*$f_4$). The strength of the individual contributions is set by the weights W1 to W4. The imaginary unit is i. In accordance with one embodiment according to the invention, a binary phase grating, i.e. $f_G$ = 0 or π, is used for realizing the complex encoded phase grating fc.

The following applies to the binary phase grating: if Re{S} > 0 then $f_G$ = π, else $f_G$ = 0. In accordance with a further embodiment according to the invention, a continuous phase grating is used for realizing the complex encoded phase grating $f_G$. The following applies in this case: $f_G$ = exp($i\angle${S}). The diffraction efficiencies of the individual phase functions $f_1$, $f_2$, $f_3$ and $f_4$ have different magnitudes; in the present embodiment, the phase functions $f_1$ and $f_2$ are each included with a weight $W_1$ or $W_2$ of 35% and the phase functions $f_3$ and $f_4$ are each included with a weight $W_3$ or $W_4$ of 15%.

The phase function $f_1$ of the phase grating $f_G$ in accordance with Figure 5 generates the non-spherical output wave 56. The phase function $f_2$ of the phase grating $f_G$ generates the spherical output wave 58. The grating periods corresponding to the phase functions $f_1$ and $f_2$ vary spatially over the diffractive structure pattern 54 in accordance with Figure 2.

The further phase functions $f_3$ and $f_4$ of the phase grating $f_G$ are linear gratings for generating plane waves (P), respectively in +1st and -1st order of diffraction. Thus, the phase function $f_3$ is configured as y-linear grating for generating plane output waves which are deflected in relation to the input wave 42 in the +/-y-direction. The plane output waves $60_y^{+1}$ and $60_y^{-1}$, plotted in Figure 2, are waves which are generated by the y-linear grating in +1st and -1st order of diffraction. The plane output waves $60_x^{+1}$ and $60_x^{-1}$, generated by the x-linear grating which is formed by the phase function $f_4$, cannot be seen in Figure 2 due to the sectional plane selected therein, but are depicted in Figure 3 instead.

Figure 3 shows the output waves in the direction space generated by the center of the diffractive structure pattern 54 in accordance with Figure 2. The x- and y-coordinates in the direction space are the x- and y-coordinates of the vector, normalized to one, in the propagation direction. The components of this direction vector are referred to as direction cosine. The following applies: $-1 \leq x \leq 1$, $-1 \leq y \leq 1$ and $x^2 + y^2 \leq 1$.

While the output waves $60_y^{+1}$ and $60_y^{-1}$ are offset in relation to the non-spherical output wave 56 in the +y - or -y - direction, the output waves $60_x^{+1}$ and $60_x^{-1}$ are offset in relation to the non-spherical output wave 56 in the -y - and +x - or -x - direction. The output waves $60_x^{+1}$ and $60_x^{-1}$ are likewise plane waves and are generated by the phase function $f_4$ configured as x-linear grating in +1st and -1st order of diffraction. In the shown embodiment, the propagation direction of the spherical output wave 58 is tilted in +x - and +y - direction compared to the propagation direction of the non-spherical output wave 56.

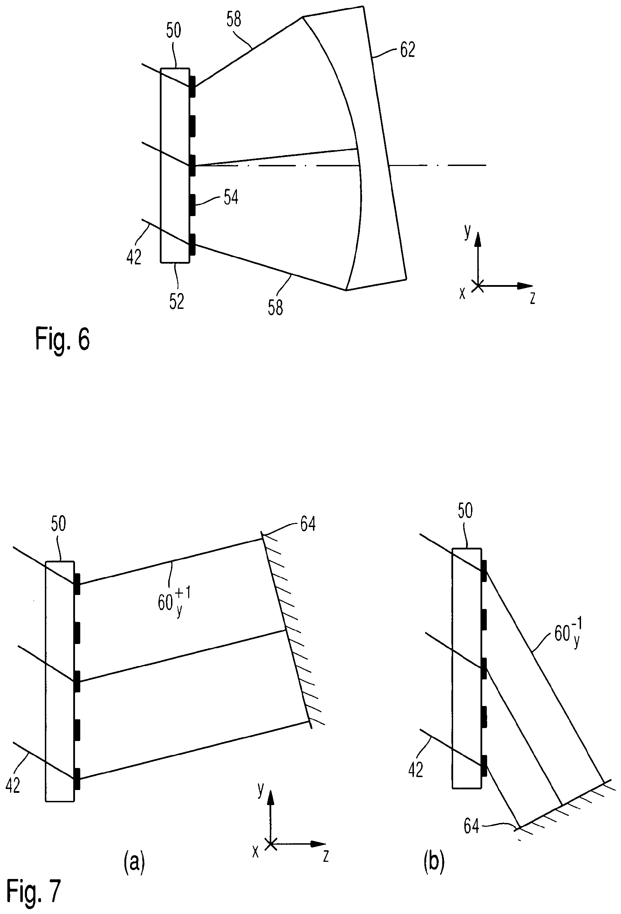

Before measuring the optical element 14, during which the latter, as depicted in Figure 1, is arranged in the beam path of the non-spherical output wave 56, the measurement system 10 is initially operated in a calibration mode. In this mode, a calibration sphere 62 is initially arranged instead of the optical element 14 on the output wave-side in respect of the diffractive optical element 50, and to be precise in the beam path of the spherical output wave 58, as illustrated in Figure 6.

The spherical output wave 58 is incident on the calibration sphere 62, the shape of which was determined previously in absolute terms. This absolute determination can, for example, be brought about by means of the shearing technique known to a person skilled in the art or by means of the likewise known three position test.

After reflection at the calibration sphere 62, the spherical output wave 58 passes through the diffractive optical element 50 and is directed onto a detection area 47 of a camera chip 48 of the interferometer camera 45 by means of a lens system 46 of the interferometer camera 45. An interference pattern is generated on the detection area 47 by superposition with the reference wave 40, from which interference pattern the deviation of the spherical output wave 58 from its intended wavefront in the form of an ideal spherical wave is determined by means of an evaluation device 49. Hence, the actual wavefront of the output wave 58 is determined in absolute terms by means of the calibration sphere 62. The deviations of the spherical output wave 58 from its intended wavefront are stored as calibration deviations K1.

The calibration sphere is thereupon removed again from the output wave-side beam path of the diffractive optical element 50 and, instead, a plane mirror 64 is successively arranged in the respective beam paths of the plane output waves $60_y^{+1}$ and $60_y^{-1}$ and $60_x^{+1}$ and $60_x^{-1}$, as depicted in Figure 7 for the output wave $60_y^{+1}$ in (a) and for the output wave $60_y^{-1}$ in (b). The plane mirror 64 is in each case arranged such that the appropriate output wave $60_y^{+1}$, $60_y^{-1}$, $60_x^{+1}$ or $60_x^{-1}$ is reflected onto itself and returns to the interferometer 16 of the measurement system 10 after passing through the diffractive optical element 50 in the beam path of the input wave 42 and interferes with the reference wave 40 on the detection area 47 of the camera chip 48.

The camera chip 48 records respective interference patterns for each of the two output waves $60_y^{+1}$ and $60_y^{-1}$. As explained above, the two output waves $60_y^{+1}$ and $60_y^{-1}$ are generated by diffraction in +1st and -1st order of diffraction at the y-linear grating formed by the phase function $f_3$. The interference patterns recorded for the two output waves $60_y^{+1}$ and $60_y^{-1}$ are combined with one another in the evaluation device 49 such that, as a result, the x-coordinates of a distortion of the phase function $f_3$ are established over the whole area of the diffractive structure pattern 54 on the diffractive optical element 50. In accordance with one embodiment, the difference between the two interference patterns is formed in this case.

The same evaluation occurs for the two output waves $60_x^{+1}$ and $60_x^{-1}$. As a result, the y-coordinates of a distortion of the phase function $f_4$ over the whole area of the diffractive structure pattern 54 are established on the diffractive optical element 50. The distortion in x- and y-coordinates of the whole diffractive structure pattern 54 is thereupon deduced from the distortion coordinates thus obtained. This distortion vector field is stored as further calibration deviations K2 and serves for correcting the spherical output wave 58 and the non-spherical output wave 56.

Furthermore, the interference patterns of the output waves $60_y^{+1}$ and $60_y^{-1}$ and the output waves $60_x^{+1}$ and $60_x^{-1}$ and the spherical output wave 58 can be combined with one another, for example by summing, in such a way that this can therefore be used to establish the shape or profile deviations of the substrate surface, having the diffractive structure pattern 54, of the diffractive optical element 50. The shape and profile deviations established thus are also stored as further calibration deviations K3.

Finally, the optical surface 12 of the optical element 14 is measured by means of the measurement system 10. To this end, the test object in the form of the optical element 14 is, as shown in Figure 1, arranged in the beam path of the non-spherical output wave 56 such that the latter is incident in autocollimation on the optical surface 12 and reflected thereon. The reflected wave thereupon returns through the diffractive optical element 50 as returning measurement wave 66 to the interferometer 16. The returning measurement wave 66 interferes with the reference wave 40 on the detection area 47 and thereby generates an interferogram. The interferogram is evaluated by means of the evaluation device 49 and this is used to establish the deviation of the actual shape of the optical surface 12 from the intended shape thereof. All calibration deviations established previously are taken into account during the evaluation.

By means of the calibration deviations K1 and K2, the method renders it possible to eliminate the substrate errors of the substrate 50 and the errors as a result of the distortion of the diffractive structure pattern 54. Furthermore, by means of the calibration deviations K3, the method renders it possible to reduce the errors in the shape or profile deviations of the diffractive structure pattern 54.

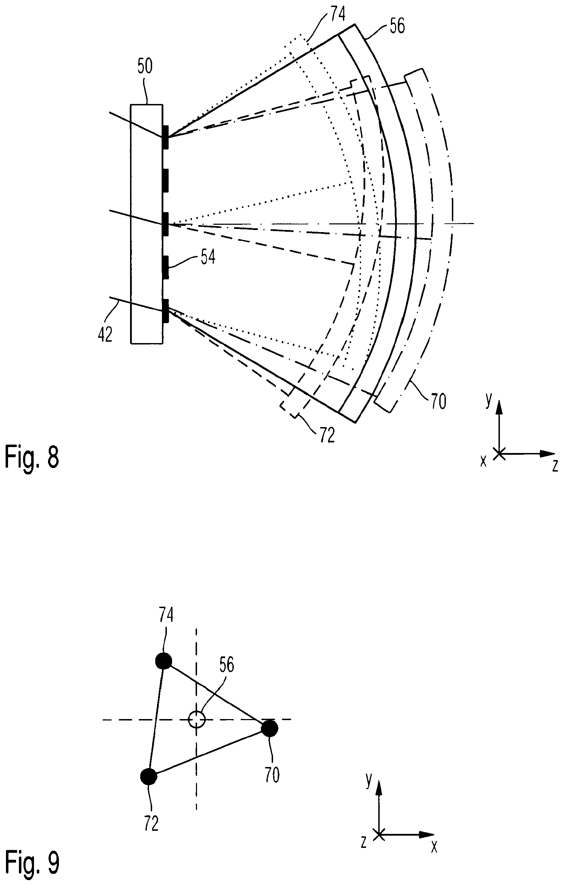

Figures 8 to 12 depict a further embodiment of the diffractive optical element 50 for use in the measurement system 10 from Figure 1. As depicted in Figure 8, the diffractive structure pattern 54 of this diffractive optical element 50 is configured such that, by diffraction at the structure pattern 54, the input wave 42 is furthermore converted into three spherical output waves 70, 72 and 74 in addition to the non-spherical output wave 56 also generated by the diffractive structure pattern of Figure 2.

Figure 9 depicts the output waves 56, 70, 72 and 74 in the direction space. It is possible to gather from this illustration that the spherical output waves 70, 72 and 74 are arranged around the non-spherical output wave 56. Here, the direction vectors of the spherical output waves 70, 72 and 74 form a triangle. The direction vector of the non-spherical output wave 56 advantageously lies within the triangle.

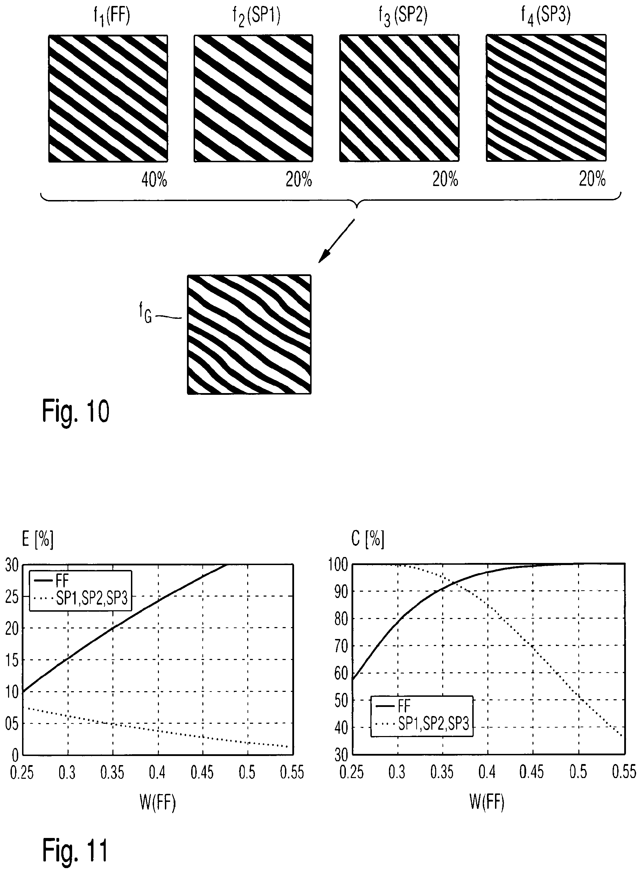

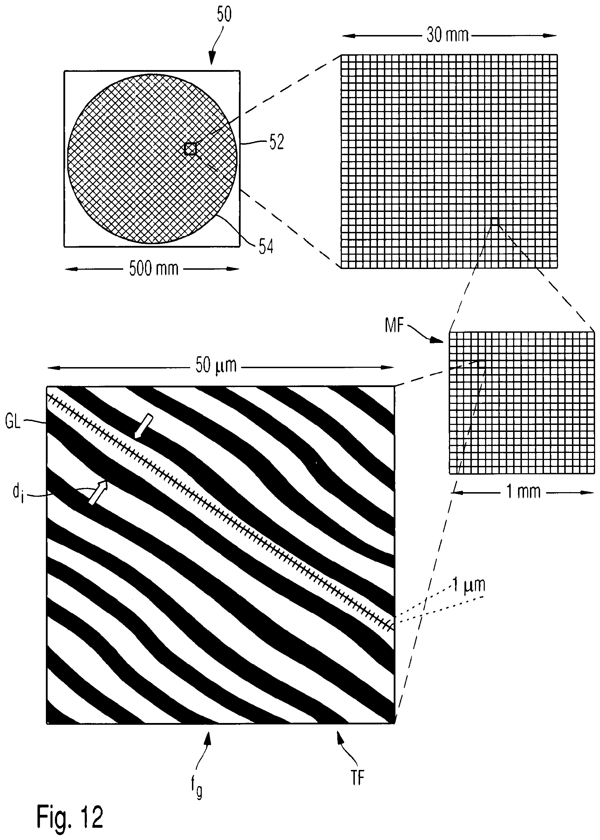

Figure 10 depicts the composition of the complex encoded phase grating $f_G$ of the structure pattern 54 in accordance with Figure 8. Like in Figure 5, the part of the phase grating $f_G$ displayed in Figure 10 is a greatly magnified section of the corresponding structure pattern 54. All that is depicted is a square section with an edge length of 50 $\mu$m. As depicted in Figure 12, the diffractive optical element 50 in accordance with one embodiment is arranged on a square substrate 52 with an edge length of 500 mm. In this embodiment, the diffractive structure pattern 54 is circular and largely covers the substrate 52.

As shown in Figure 10, the complex encoded phase grating $f_G$ of the structure pattern 54 in accordance with Figure 8 contains the individual phase functions $f_1$ to f4. A separate output wave is generated for each individual phase function $f_1$ to $f_4$ by appropriate diffraction when the input wave 42 is radiated onto the diffractive optical element 50.

The non-spherical output wave 56, the wavefront of which is adapted to the intended shape of the optical surface 12 of the optical element 14 to be measured, is generated at the phase function $f_1$. The non-spherical output wave 56 serves as measurement wave. The spherical output wave 70 is generated at the phase function $f_2$, the spherical output wave 72 is generated at the phase function $f_3$ and the spherical output wave 74 is generated at the phase function $f_4$. With a 40% weight, the phase function $f_1$ is weighted twice as strongly as the remaining phase functions $f_2$ to $f_4$, the weight of which is 20% in each case. The three spherical output waves 70, 72, and 74 may also be referred to as calibration waves.

In appropriate diagrams, Figure 11 firstly shows the diffraction efficiency E of the diffractive optical element 50 in accordance with Figure 8 during a single passage and secondly the contrast C during two passages through the diffractive optical element 50 of the interference pattern registered by the camera chip 48 of the interferometric measurement system, firstly for the non-spherical output wave 56 (FF) and secondly for the spherical output waves 70, 72 and 74 (SP1, SP2 and SP3). In the diagrams, the corresponding diffraction efficiencies or contrasts are plotted depending on the weight of the phase function $f_1$ generating the non-spherical output wave 56 (FF). The diagrams relate to an embodiment in which the Fizeau element 36 reflects 0.4%, the optical surface 12 of the non-spherical area reflects 4% and the optical surfaces of calibration spheres adapted to the spherical output waves 70, 72 and 74 each reflect 80%. It becomes clear from the diagrams that in the case of the weight of $f_1$ in accordance with Figure 10 with 40%, this results in a diffraction efficiency in a single passage of slightly less than 25%, while the contrast is slightly over 90%. The contrast of the spherical output waves 70, 72 and 74 then lies at nearly 85%.

Analogous to the measurement of the optical surface 12 of the optical element 14 by means of the diffractive optical element 50 in accordance with Figure 2, the measurement system 10 when using the diffractive optical element 50 in accordance with Figure 8 is initially operated in the calibration mode. To this end, the calibration spheres adapted to the spherical output waves 70, 72 and 74 are successively arranged in a corresponding manner in the respective beam path of the output waves 70, 72 and 74 and measured by interferometry in each case. The interferometric measurement results are stored in the evaluation device 49 as calibration measurement data for each of the spherical output waves 70, 72 and 74.

In the subsequent measurement of the optical surface 12 of the test object in form of the optical element 14 by means of the non-spherical output wave 56, the measurement data obtained thereby are evaluated by the evaluation device 49 taking into account the stored calibration measurement data. Since the calibration measurement data obtained during the measurement of the spherical output waves 70, 72 and 74 are taken into account, manufacturing errors of the diffractive optical element 50 can be corrected in the measurement result of the optical surface 12, as a result of which the shape of the optical surface 12 can be determined with high accuracy. Manufacturing errors which can be corrected here include shape or profile deviations of the substrate surface, having the diffractive structure pattern 54, of the diffractive optical element 50 and distortion effects in the diffractive structure pattern 54.

Hence, it is possible to dispense with explicit measurement of distortion errors of the diffractive structure pattern 54. The option of calibrating the shape measurement of the optical surface 12 using three spherical waves renders it possible to achieve a better error budget. In particular, this is due to the fact that shape or profile deviations of the diffractive structure pattern 54 in the spherical output waves 70, 72 and 74 and the non-spherical output wave 56 generate very similar deviations. Hence, these shape or profile deviations can, in a large part, be calibrated.

The diffraction grating formed by the diffractive structure pattern 54 in the embodiment in accordance with Figure 8 is configured such that a stripe density of the grating lines averaged within a square measurement area of the diffraction grating with 1 mm edge length over any square partial area with 50 $\mu$m edge length has a variation which extends over a span of less than 20 lines per millimeter.

By way of example, as explained below with reference to Figure 12, it is possible to establish the variation in the stripe density of the grating lines. The diffractive structure pattern 54, which is arranged on the substrate 52 of the diffractive optical element 50 and, in accordance with one embodiment, has a circular form with a diameter of approximately 500 mm, is subdivided into individual square measurement areas MF, each with a side length of 1 mm. The measurement areas MF are in turn subdivided into individual square partial areas TF with a respective side length of 50 $\mu$m.

Within the square partial areas TF, a respective periodic distance $d_i$ is established at measurement points i along each grating line GL, which measurement points are in each case separated by 1 $\mu$m. The periodic distance $d_i$ results from the sum of the width of the grating line GL at the measurement point i and the width of the space to the next grating line adjoining on one side thereto. The measured periodic distances $d_i$ are converted into the stripe density values $D_i$ by forming an inverse. The values for the stripe density $D_i$ thus obtained are averaged over all measurement points i of all grating lines GL within the relevant partial area TF.

This is brought about for all partial areas TF within the square measurement area MF, i.e. for 400 partial areas. Thus, a mean stripe density $D_M$ is determined for every partial area TF within the measurement area MF. In accordance with the specification above, the variation of the mean stripe densities $D_M$ for the individual partial areas TF has a span of less than 20 lines per millimeter. As a result, the mean stripe densities $D_M$ established for the various partial areas TF within the measurement area MF vary by less than 20 lines per millimeter. By way of example, if the stripe density

$D_M$ on average is 200 lines per millimeter over all partial areas TF, the stripe density may, in accordance with the specification mentioned above, at most vary within the range of between 190 and 210 lines per millimeter.

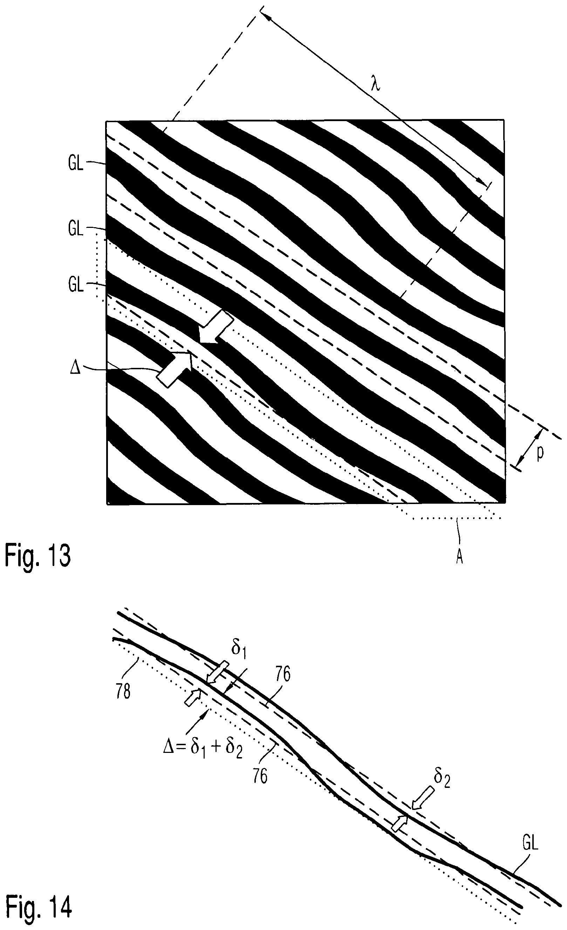

Figures 13 and 14 depict a further property of the diffractive structure pattern 54 in the embodiment in accordance with Figure 8. Here, Figure 13 shows a square section with 50 $\mu$m edge length of the diffraction grating formed by the diffractive structure pattern 54 and Figure 14 shows the section A from Figure 13, in which one of the grating lines GL is contained.

The diffraction grating depicted in Figure 13 has a mean periodic distance p, which is determined by a center-to-center distance between in each case neighboring grating lines GL, averaged over the diffraction grating. It is also possible to determine the mean periodic distance by averaging the established periodic distances $d_i$, which were described above with reference to Figure 12.

The grating lines GL have a wave-like form, to be precise such that a mean wave period $\lambda$ of the grating lines lies in the region between 3 times and 20 times the mean periodic distance d of the diffraction grating. Furthermore, the grating lines GL have a variation over a span $\Delta$ transversely to their longitudinal extent, which lies in the region between 0.1 times and 3 times the mean periodic distance p of the diffraction grating.

As depicted in Figure 14, the span $\Delta$ can either be determined by virtue of the edge boundaries of the corresponding grating line GL being approximated by straight boundary lines 76 and the deviations of the grating line GL at the wave peak and in the wave trough being determined in relation to the corresponding approximated boundary line 76. The sum of these deviations, i.e. the sum of the deviation $\delta1$ at the wave peak and the deviation $\delta2$ in the wave trough result in the span $\Delta$ of the variation. However, the span $\Delta$ can also be determined by virtue of a straight auxiliary line 78 being pushed toward the grating line from one side until said auxiliary line adjoins the grating line GL. The maximum distance between the edge boundary of the grating line GL and the auxiliary line 78 then likewise corresponds to the span $\Delta$.

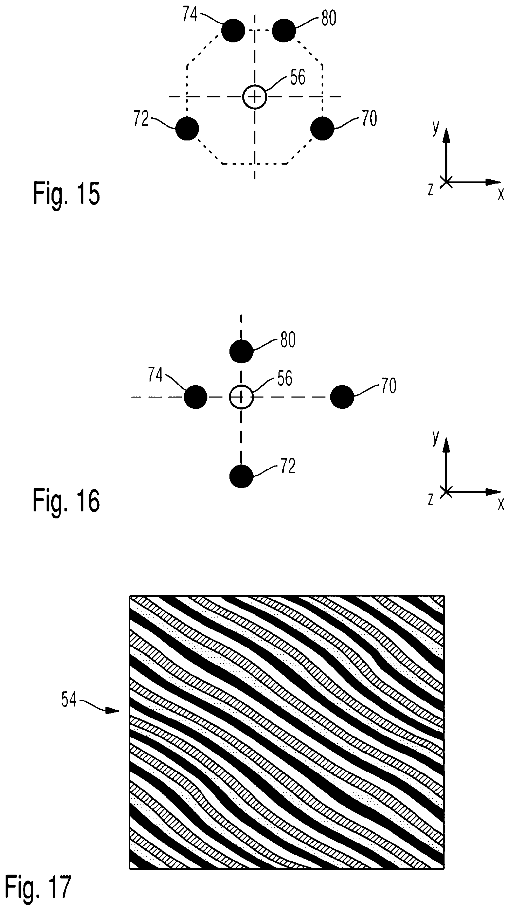

Figures 15 and 16 show depictions of output waves in the direction space which are generated by further embodiments of the diffractive striped pattern 54. In both embodiments, four further separate spherical output waves 70, 72, 74 and 80, serving as calibration waves, are generated in addition to the centrally arranged non-spherical output wave 56, serving as measurement wave, by diffraction at the striped pattern 54 from the input wave 42. Here, the spherical output waves 70, 72, 74 and 80 are arranged such that they do not lie symmetrically about the non-spherical output wave, i.e. the respective opposite "space", which is defined by mirroring the respective point on the non-spherical output wave 56 in the plane of the illustration in the direction space, remains free. In other words, the respective mean propagation directions of the spherical output waves 70, 72, 74 and 80 in pairs are in each case not arranged symmetrical to one another in relation to an axis defined by the mean propagation direction of the non-spherical output wave 56.

In the embodiment in accordance with Figure 15, the spherical output waves 80 and 70 are, in the plane of the illustration in the direction space, arranged symmetrically to the spherical output waves 72 and 74 in relation to the symmetry axis arranged transversely to the propagation direction of the non-spherical output wave 56. In the embodiment in accordance with Figure 16, this symmetry is lacking, but the spherical output waves 70 and 74 as well as 72 and 76 are in each case arranged on a straight line extending through the non-spherical output wave 56 in the plane of the illustration in the direction space.

The use of four spherical output waves renders it possible to find a configuration in which the sensitivity to grating faults is minimized during the calibration of the shape measurement of the optical surface 12 of the optical element 14 due to an additional degree of freedom compared to the use of merely three spherical output waves.

In accordance with one embodiment variant of the diffractive optical elements 50 in one of the embodiments described above, the diffractive structure pattern 54 are embodied as multilevel phase gratings, as depicted in Figure 17 using the example of the phase pattern $f_G$ from Figure 10. As a person skilled in the art is well aware, a multilevel phase grating should be understood to mean a phase grating which has at least one intermediate level between the uppermost and the lowermost level. Hence, such a phase grating has at least three levels; four levels are provided in the embodiment shown in Figure 17. The use of multilevel phase gratings renders it possible, at least in part, to compensate or even to overcompensate for a diffraction efficiency loss brought about by the undertaken complex encoding.

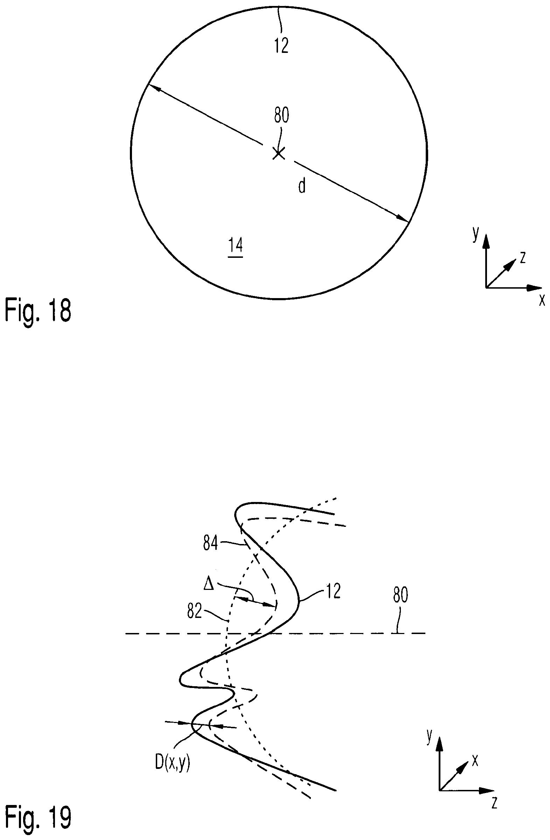

Figures 18 and 19 depict an embodiment of an optical element 14 in the form of a lens element or a mirror, in particular in the form of a mirror for an EUV projection exposure apparatus. The optical element 14 has an optical surface 12 formed as a free-form surface. During the production, the optical surface 12 of the optical element 14 was initially made to approximate a predetermined intended shape in the form of a free-form surface in accordance with the production accuracy. The approximated surface 12 was thereupon measured by means of the interferometric measurement system 10 using the diffractive optical element 50 in one of the embodiments and hence the deviation of said surface from the intended shape was determined with high accuracy. The surface 12 was processed further at suitable points on the basis of the measurement result such that said surface has the specifications specified below.

It is possible to identify the diameter d of the optical surface 12, which is approximately circular, in Figure 18, which shows the optical element 14 in a top view. In the depicted embodiment, the diameter d is approximately 600 mm. Figure 19 shows a schematic cross section of the optical element along an axis 80 of the optical element 14. The axis 80 is the rotational axis of a rotationally symmetric asphere 82 with the best fit to an intended shape 84 of the optical surface 12 and arranged in the z-direction in the drawing. As already mentioned above, the intended shape 84 has the form of a free-form surface and is therefore not rotationally symmetric. The deviations of the optical surface 12 from the intended shape 84 shown in Figure 19 are depicted with much magnification and in a schematic manner for illustration purposes.

The maximum deviation $\Delta$ of the intended shape 84 from the rotationally symmetric asphere 82 with the best fit is approximately 6 $\mu$m in the present embodiment and hence is greater than 5 $\mu$m. The deviation of the actual shape of the optical surface 12 from the intended shape 84 is described by a 2-dimensional deviation D(x,y), where x and y denote the coordinates on the surface 12. The deviations in D(x,y), which trace back to oscillations with vibration wavelengths of between d/100, i.e. approximately 5 mm, and d/5, i.e. approximately 100 mm, are at most 0.05 nm.

If the deviation D(x,y) is converted from real space into frequency space by means of a Fourier transform, the function d(v) is obtained, where v denotes the frequency. The amplitudes of the function d(v) in the region between the frequencies which correspond to the boundary values of the vibration wavelength range specified above are therefore at most 0.05 nm.

List of reference signs

| | |
|---|---|
| 10 | Interferometric measurement system |
| 12 | Optical surface |
| 14 | Optical element |
| 16 | Interferometer |
| 18 | Light source |
| 20 | Illumination radiation |
| 21 | Laser |
| 22 | Laser beam |
| 24 | Focusing lens |
| 26 | Stop |
| 28 | Divergent beam |
| 30 | Lens-element group |
| 32 | Optical axis |
| 34 | Beam splitter |
| 36 | Fizeau element |
| 38 | Fizeau area |
| 40 | Reference wave |
| 42 | Input wave |
| 44 | Plane wave front |
| 45 | Interferometer camera |
| 46 | Lens system |
| 47 | Detection area |
| 48 | Camera chip |
| 49 | Evaluation device |
| 50 | Diffractive optical element |
| 52 | Substrate |
| 54 | Diffractive structure pattern |
| 56 | Non-spherical output wave |
| 58 | Spherical output wave |
| $60_x{}^{+1}$ | Plane output wave |
| $60_x{}^{-1}$ | Plane output wave |
| $60_y{}^{+1}$ | Plane output wave |
| $60_y{}^{-1}$ | Plane output wave |
| 62 | Calibration sphere |
| 64 | Plane mirror |
| 66 | Returning measurement wave |
| 70 | Spherical output wave |
| 72 | Spherical output wave |
| 74 | Spherical output wave |

76      Approximated straight boundary line
78      Straight auxiliary line
80      Rotational axis
82      Rotationally symmetric asphere with best fit
84      Intended shape

**Claims**

1.  A method for determining a deviation of an actual shape from an intended shape (84) of an optical surface (12) of an optical element (14), comprising the following steps:

    - generating an input wave (42),
    - arranging a diffractive optical element (50) in the beam path of the input wave and converting the input wave into at least three separate output waves by interaction with the diffractive optical element, wherein one of the output waves is a measurement wave (56), adapted to the intended shape (84) of the optical surface, with a non-spherical wavefront, and at least two further ones of the output waves are calibration waves (58, $60y^{+1}$, $60y^{+1}$; 70, 72, 74),
    - determining calibration corrections of the diffractive optical element by means of each one of the at least two calibration waves,
    - arranging the optical surface in the beam path of the adapted wave (56) and measuring the wavefront of the adapted measurement wave after interaction with the optical surface, wherein the wavefront of the adapted measurement wave is measured with the diffractive optical element (50) being oriented in respect of the input wave the same as during the determining of the calibration corrections, and
    - correcting the measured wavefront by means of the determined calibration corrections.

2.  The method according to Claim 1,
    wherein the diffractive optical element (50) comprises a complex encoded phase grating.

3.  The method according to Claim 1 or 2,
    wherein the output waves have respective mean propagation directions which are oriented to one another such that the mean propagation directions of the at least two calibration waves (58, $60y^{+1}$, $60y^{+1}$; 70, 72, 74) are arranged asymmetrically to one another in relation to an axis defined by the mean propagation direction of the measurement output wave (56).

**Patentansprüche**

1.  Verfahren zum Bestimmen einer Abweichung einer tatsächlichen Form von einer vorgesehenen Form (84) einer optischen Oberfläche (12) eines optischen Elements (14), umfassend die folgenden Schritte:

    - Erzeugen einer Eingangswelle (42),
    - Anordnen eines diffraktiven optischen Elements (50) in dem Strahlpfad der Eingangswelle, und Konvertieren der Eingangswelle in mindestens drei separate Ausgangswellen durch Interaktion mit dem diffraktiven optischen Element, wobei eine der Ausgangswellen eine Messwelle (56), die an die vorgesehene Form (84) der optischen Oberfläche angepasst ist, mit einer nicht-sphärischen Wellenfront ist, und wobei mindestens zwei weitere der Ausgangswellen Kalibrierwellen (58, $60y^{+1}$, $60y^{+1}$; 70, 72, 74) sind,
    - Bestimmen von Kalibrierkorrekturen des diffraktiven optischen Elements mittels jeder von den mindestens zwei Kalibrierwellen,
    - Anordnen der optischen Oberfläche in dem Strahlpfad der angepassten Welle (56) und Messen der Wellenfront der angepassten Messwelle nach Interaktion mit der optischen Oberfläche, wobei die Wellenfront der angepassten Messwelle so gemessen wird, dass das diffraktive optische Element (50) in Bezug auf die Eingangswelle genau so wie während des Bestimmens der Kalibrierkorrekturen orientiert ist, und
    - Korrigieren der gemessenen Wellenfront mittels der bestimmten Kalibrierkorrekturen.

2.  Verfahren nach Anspruch 1, wobei das diffraktive optische Element (50) ein komplex kodiertes Phasengitter umfasst.

3.  Verfahren nach Anspruch 1 oder 2, wobei die Ausgangswellen jeweilige mittlere Ausbreitungsrichtungen haben, die zueinander derart orientiert sind, dass die mittleren Ausbreitungsrichtungen der mindestens zwei Kalibrierwellen (58, $60y^{+1}$, $60y^{+1}$; 70, 72, 74) bezogen auf eine Achse, die durch die mittlere Ausbreitungsrichtung der Messausgangswelle (56) definiert ist, asymmetrisch zueinander angeordnet sind.

**Revendications**

1. Procédé permettant de déterminer un écart d'une forme réelle par rapport à une forme prévue (84) d'une surface optique (12) d'un élément optique (14), comprenant les étapes suivantes :

   - la génération d'une onde d'entrée (42),
   - la disposition d'un élément optique diffractif (50) dans le trajet de faisceau de l'onde d'entrée et la conversion de l'onde d'entrée en au moins trois ondes de sortie distinctes par interaction avec l'élément optique diffractif, dans lequel l'une des ondes de sortie est une onde de mesure (56), adaptée à la forme prévue (84) de la surface optique, avec un front d'onde non sphérique, et au moins deux autres des ondes de sortie sont des ondes d'étalonnage (58, $60y^{+1}$, $60_y^{+1}$ ; 70, 72, 74),
   - la détermination de corrections d'étalonnage de l'élément optique diffractif au moyen de chacune des au moins deux ondes d'étalonnage,
   - la disposition de la surface optique dans le trajet de faisceau de l'onde adaptée (56) et la mesure du front d'onde de l'onde de mesure adaptée après interaction avec la surface optique, dans lequel le front d'onde de l'onde de mesure adaptée est mesuré avec l'élément optique diffractif (50) étant orienté par rapport à l'onde d'entrée de la même manière que pendant la détermination des corrections d'étalonnage, et
   - la correction du front d'onde mesuré au moyen des corrections d'étalonnage déterminées.

2. Procédé selon la revendication 1,
   dans lequel l'élément optique diffractif (50) comprend un réseau de phase à codage complexe.

3. Procédé selon la revendication 1 ou 2,
   dans lequel les ondes de sortie ont des directions de propagation moyenne respectives qui sont orientées les unes par rapport aux autres de telle sorte que les directions de propagation moyenne des au moins deux ondes d'étalonnage (58, $60y^{+1}$, $60_y^{+1}$ ; 70, 72, 74) soient disposées de manière asymétrique l'une par rapport à l'autre par rapport à un axe défini par la direction de propagation moyenne de l'onde de sortie de mesure (56).

Fig. 1

Fig. 2

Fig. 3

**Fig. 4**

**Fig. 5**

**Fig. 6**

**Fig. 7**

(a)

(b)

Fig. 8

Fig. 9

Fig. 10

Fig. 11

Fig. 12

Fig. 13

Fig. 14

Fig. 15

Fig. 16

Fig. 17

Fig. 18

Fig. 19

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20100177321 A1

**Non-patent literature cited in the description**

- **DONALD C. O'SHEA et al.** Diffractive optics: design, fabrication, and test. *The Society of Photo-Optical Instrumentation Engineers,* 2004, 29-35

- Combination of blazed and laterally blazed structures. **H. KLEEMANN et al.** Diffractive Optics and Micro-Optics, OSA Technical Digest. Optical Society of America, 2004